(19) Europäisches Patentamt
European Patent Office
Office européen des brevets

(11) **EP 1 553 127 A1**

(12) **EUROPÄISCHE PATENTANMELDUNG**

(43) Veröffentlichungstag:
**13.07.2005 Patentblatt 2005/28**

(51) Int Cl.[7]: **C08J 9/00**, C08G 77/46, C08G 77/44, C08G 77/12

(21) Anmeldenummer: **04030758.9**

(22) Anmeldetag: **24.12.2004**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **09.01.2004 DE 102004001408**

(71) Anmelder: **Goldschmidt GmbH**
**45127 Essen (DE)**

(72) Erfinder:
- **Ulrich-Brehm, Isabella, Dr.**
  **40882 Ratingen (DE)**
- **Eilbracht, Christian, Dr.**
  **44627 Herne (DE)**
- **Klincke, Manfred**
  **44581 Castrop-Rauxel (DE)**

(54) **Verwendung blockweise aufgebauter Polyethersiloxane als Stabilisatoren in Polyurethanschäumen**

(57) Gegenstand der Erfindung ist die Verwendung von Verbindungen der allgemeinen Formel (VII)

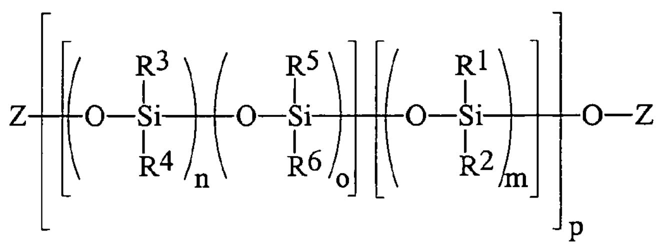

(VII)

worin

| | |
|---|---|
| $R^1$, $R^2$, $R^3$, $R^4$, $R^5$ | gleiche oder verschiedene Reste, ausgewählt aus linearen oder verzweigten, gesättigten, ein- oder mehrfach ungesättigten Alkyl-, Aryl-, Alkylaryl- oder Arylalkylresten mit 1 bis 20, insbesondere 1 bis 10 C-Atomen, Halogenalkylgruppen mit 1 bis 20 C-Atomen, Siloxygruppen und Triorganosiloxygruppen darstellen; |
| $R^6$ | mindestens einen Rest ausgesucht aus der Gruppe $CH_2$-$CH_2$-$(CH_2)_a$-A oder CH=CH-$(CH_2)_a$-A darstellt, wobei |

a eine ganze Zahl zwischen 0 und 10 ist; und
A einen Rest darstellt, der ausgewählt ist aus Polyoxyalkylenresten oder linearen, verzweigten oder cyclischen, gesättigten, ein- oder mehrfach ungesättigten Alkyl-, Aryl-, Alkylaryl- oder Arylalkylresten mit 1 bis 100, insbesondere 1 bis 50 C-Atomen, die gegebenenfalls Heteroatome enthalten;

| | |
|---|---|
| Z | einen Triorganosilylrest darstellt; |
| m | eine ganze Zahl zwischen 5 und 300; |
| n | eine ganze Zahl zwischen 5 und 300; |
| o | eine ganze Zahl zwischen 2 und 300 ist; wobei die Summe $(n + o) \leq 400$ ist; |
| p | eine ganze Zahl zwischen 2 und 50 ist, |
| als | Stabilisatoren in der Herstellung von Polyurethanschaumstoffen. |

EP 1 553 127 A1

## Beschreibung

Gegenstand der Erfindung ist die Verwendung blockweise aufgebauter Polyethersiloxane als Stabilisatoren in der Herstellung von Polyurethanschaumstoffen.

Siloxane werden aufgrund ihrer einzigartigen Eigenschaften wie Wasserabstoßung, Grenzflächenaktivität, Temperaturstabilität etc. in zahlreichen technischen Anwendungen eingesetzt. Dazu zählen unter anderem die Stabilisierung von Polyurethanschäumen. Zur technischen Herstellung von Polyurethanschaumstoffen werden dabei üblicherweise Polyoxyalkylen-Polysiloxan-Blockcopolymere als Stabilisatoren verwendet. Sie emulgieren die verwendeten Rohstoffe, stabilisieren den Schaumstoff während des Herstellungsprozesses und ermöglichen die Ausbildung einer gleichmäßigen Porenstruktur mit der gewünschten Zellfeinheit und Offenzelligkeit. Durch geeignete, auf die jeweiligen Rohstoffe und Produktionsverfahren abgestimmte Silicontenside lassen sich so Schaumeigenschaften und Herstellverfahren optimieren.

Die Verwendbarkeit dieser Polyoxyalkylen-Polysiloxan-Blockcopolymere in Polyurethanschaumanwendungen wird durch ein einzustellendes Gleichgewicht der Polysiloxanblöcke sowie der Polyoxyalkylenblöcke bestimmt. Damit ist der Aufbau als auch die Verteilung dieser beiden Blöcke von zentraler Bedeutung. Die Möglichkeiten der Variation der Polyoxyalkylenblöcke wird u. a. in der EP-A-0 867 464 beschrieben. Die Polyoxyalkylenblöcke können über eine hydrolysestabile SiC-Bindung oder eine begrenzt hydrolysestabile Si-OC-Bindung mit dem Polysiloxan verknüpft sein. Das Polysiloxan kann bezüglich der Anzahl der Siloxaneinheiten, der Verzweigungen und der Zahl der Verknüpfungsmöglichkeiten mit dem Polyoxyalkylen verändert werden.

Eine Standardmethode zur Darstellung SiC-verknüpfter Polyoxyalkylen-Polysiloxan-Blockcopolymerer ist die Hydrosilylierung. Hierbei wird ein SiH-haltiges Siloxan mit organischen Gruppen umgesetzt, die eine terminale Doppelbindung enthalten. Werden die SiH-haltigen Siloxane nach Standardverfahren hergestellt (Equilibrierung), so sind die SiH-Funktionalitäten statistisch entlang der Siloxankette verteilt. Bei einer vorgegebenen Funktionalisierungsdichte, die die erforderliche Verträglichkeit des Siloxans mit den Polyurethanrohstoffen gewährleistet, bestimmt sich die durchschnittliche Länge der unmodifizierten Bereiche in den Siloxanketten als Quotient aus Gesamtkettenlänge und Anzahl an SiH-Funktionalitäten, d.h. die erreichbare Länge an unmodifiziertem Siloxan ist limitiert durch die vorgegebene Funktionalisierungsdichte. Ist die gewünschte Funktionalisierungsdichte hoch, können in den Ketten nur kurze Bereiche an unmodifiziertem Siloxan erhalten werden, wodurch es zu einer Abschwächung der eigentlichen Eigenschaften des Siloxans kommt. Wird eine niedrige Funktionalisierungsdichte eingestellt, so erhöht sich bedingt durch die statistische Verteilung insbesondere bei kurzen Kettenlängen der Anteil an unmodifizierten oder extrem schwach modifizierten Siloxanen. Diese unmodifizierten Siloxane weisen bei der Herstellung von Polyurethanschaumstoffen mangels hinreichender Rohstoffkompatibilität eine unerwünschte entschäumende und destabilisierende Wirkung auf.

Eine Optimierungsmöglichkeit der Polyoxyalkylen-Polysiloxan-Blockcopolymere als Polyurethanschaumstabilisator besteht in der partiellen Aufhebung der statistischen Verteilung der Funktionalisierung durch Siloxane mit blockweisem Aufbau, die eine Entkopplung von Funktionalisierungsdichte und maximaler Länge der unmodifizierten Bereiche erlaubt und Anteile unerwünschter nicht funktionalisierter Siloxane vermeidet. Mit Hilfe dieser Technik ist es prinzipiell möglich, die starke Oberflächenaktivität von "reinem" Siloxan und die organische Modifizierung ohne Nachteile zu kombinieren, indem mit der Formulierung gut verträgliche Siloxane bei gleichzeitiger Anwesenheit langer unmodifizierter Siloxanketten realisiert werden können. In dieser Weise können stark oberflächenspannungssenkende Stabilisatoren mit hinreichender Polymerkompatibilität eingestellt werden.

Es gab in der Vergangenheit einige Bemühungen, Siloxane mit blockweisem Aufbau zu synthetisieren, die sich aus Blöcken von unmodifiziertem Siloxan und Blöcken von organomodifiziertem Siloxan zusammensetzen.

So sind in der US-5 475 076 Verbindungen beschrieben, die Blöcke aus unmodifiziertem und modifiziertem Siloxan enthalten. Diese Verbindungen enthalten allerdings immer mindestens eine vernetzbare Gruppe (T-Einheit), über die ein Netzwerk zwischen den einzelnen Siloxanketten aufgebaut wird. Durch diese Vernetzung liegen keine Siloxanketten mehr vor, vielmehr bildet sich eine Art Duroplast.

Im Unterschied dazu beschreibt die DE-A-31 26 343 ein Verfahren, in dem $\alpha$, $\omega$-hydroxyfunktionelle Siloxane, die sich aus Monoorganohydrogensiloxan-Einheiten und gegebenenfalls Diorganosiloxaneinheiten zusammensetzen, mit $\alpha$,$\omega$-hydroxyfunktionellen Siloxanen, die ausschließlich aus Diorganosiloxaneinheiten aufgebaut sind, umgesetzt werden. Die Umsetzung erfolgt allerdings unter sauren Bedingungen, so dass nicht nur die Kondensation der Hydroxylgruppen katalysiert wird, sondern gleichzeitig auch eine Equilibrierung stattfindet, was eine Redistribution der SiH-Funktionalitäten entlang der Kette zur Folge hat. Somit wird kein blockweiser Aufbau realisiert; vielmehr kommt es nur zu einer Kettenverlängerung des Siloxans mit den SiH-Funktionalitäten.

Im Unterschied dazu beschreibt die EP-A-0 786 488 ein Verfahren zur Herstellung von Siloxanen, die aus Blöcken bestehen, die SiH-Funktionalitäten tragen und Blöcken, die frei von funktionellen Gruppen sind. Die SiH-haltigen Blöcke in diesen Siloxanen bestehen jedoch ausschließlich aus Siloxangruppen, in denen an jedem Siliziumatom eine Alkylgruppe und ein Wasserstoffatom gebunden sind.

Die Funktionalisierungsdichte dieser Blöcke ist demnach außerordentlich hoch. Für die Hydrosilylierung sind

derartig hohe Funktionalisierungsdichten oft eher von Nachteil, da es außerordentlich schwierig ist, eine quantitative Umsetzung der SiH-Funktionalitäten frei von Nebenreaktionen zu erzielen.

Als Resultat verbleibt häufig SiH im Endprodukt, vor allem, wenn eine Hydrosilylierung mit sterisch anspruchsvollen Olefinen durchgeführt wird. Reste von SiH-Funktionalitäten können während der Lagerung unkontrollierte Reaktionen eingehen (z.B. Abspaltung von Wasserstoff), was zu erheblichen Problemen führen kann.

Als Quelle für die SiH-Gruppen wird in der EP-0 786 488 $D_4H$ (1,2,3,4-Tetramethylcyclotetrasiloxan) verwendet, das aufgrund seiner außerordentlich hohen Reaktivität (Selbstentzündung) eine für industrielle Maßstäbe schwer zu handhabende Chemikalie darstellt.

Darüber hinaus bietet das beschriebene Verfahren zur Herstellung der blockweise aufgebauten Siloxane nicht die Möglichkeit, die Funktionalisierungsdichte des SiH-haltigen Blockes gezielt und definiert einzustellen.

Ein Verfahren, ein blockweise aufgebautes Siloxan aus einfach zu handhabenden Rohstoffen zu synthetisieren, das sich aus unmodifizierten Siloxanblöcken und modifizierten Siloxanblöcken zusammensetzt, wobei die Funktionalisierungsdichte des SiH-haltigen Blockes gezielt eingestellt werden kann, besteht darin, dass Equilibrierung und Kondensation voneinander getrennt durchgeführt werden.

Dadurch erhält man ein Blockcopolymer, dessen einer Block (A) aus Siloxaneinheiten ohne Wasserstoffsubstituent gemäß Formel (I) aufgebaut ist:

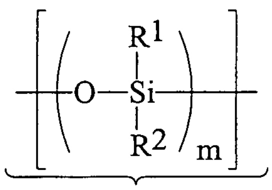
(I)

Block A

worin

- $R^1$ und $R^2$ gleiche oder verschiedene Reste, ausgewählt aus linearen oder verzweigten, gesättigten, ein- oder mehrfach ungesättigten Alkyl-, Aryl-, Alkylaryl- oder Arylalkylresten mit 1 bis 20, insbesondere 1 bis 10 C-Atomen, Halogenalkylgruppen mit 1 bis 20 C-Atomen, Siloxygruppen und Triorganosiloxygruppen darstellen; und
- m eine ganze Zahl von 5 bis 300, vorzugsweise von 5 bis 100 ist und dessen

zweiter Block (B) aus Siloxaneinheiten aufgebaut ist, die sowohl aus monowasserstoff-funktionellen Siloxaneinheiten als auch aus Siloxaneinheiten ohne Wasserstoff als Substituent gemäß Formel (II) bestehen:

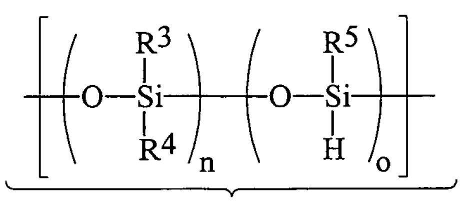
(II)

Block B

worin

- $R^3$, $R^4$ und $R^5$ gleiche oder verschiedene Reste, ausgewählt aus linearen oder verzweigten, gesättigten, ein- oder mehrfach ungesättigten Alkyl-, Aryl-, Alkylaryl- oder Arylalkylresten mit 1 bis 20, insbesondere 1 bis 10 C-Atomen, Halogenalkylgruppen mit 1 bis 20 C-Atomen, Siloxygruppen und Triorganosiloxygruppen darstellen;
- n eine ganze Zahl zwischen 5 und 300, vorzugsweise zwischen 5 und 50;
- o eine ganze Zahl zwischen 2 und 300, vorzugsweise zwischen 2 und 50 ist,

wobei die Summe (n + o) < 400, vorzugsweise < 100 ist.

Die durchschnittliche Kettenlänge (D) des Dialkylsiloxans (I) $m_D$ liegt zwischen 5 und 300, vorzugsweise zwischen 5 und 100; und die durchschnittliche Kettenlänge des Siloxans (II) $(n + o)_D$ ist unabhängig von $m_D$ 7 bis 400, bevorzugt 7 bis 100.

Das Verfahren zur Herstellung von Blockcopolymeren besteht darin, dass man ein Prepolymer der Formel (III)

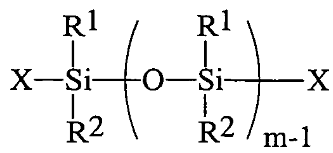

(III)

worin

| | |
|---|---|
| $R^1$ und $R^2$ | gleiche oder verschiedene Reste, ausgewählt aus linearen oder verzweigten, gesättigten, ein- oder mehrfach ungesättigten Alkyl-, Aryl-, Alkylaryl- oder Arylalkylresten mit 1 bis 20, insbesondere 1 bis 10 C-Atomen, Halogenalkylgruppen mit 1 bis 20 C-Atomen, Siloxygruppen und Triorganosiloxygruppen darstellen; |
| X | ein Halogen, eine Hydroxygruppe, eine Alkoxygruppe, eine organische Säuregruppe oder eine Sulfonsäuregruppe ist; |
| m | eine ganze Zahl zwischen 5 und 300, vorzugsweise zwischen 5 und 100, die durchschnittliche Anzahl von Siloxaneinheiten in der Kette darstellt, |

mit einer Prepolymermischung der Zusammensetzung der Formeln (IVa bis IVc)

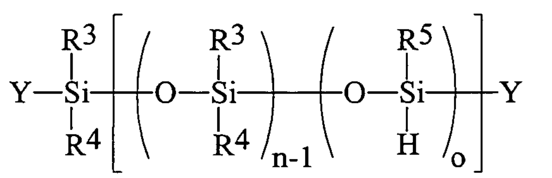

(IVa)

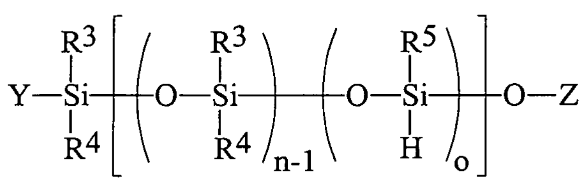

(IVb)

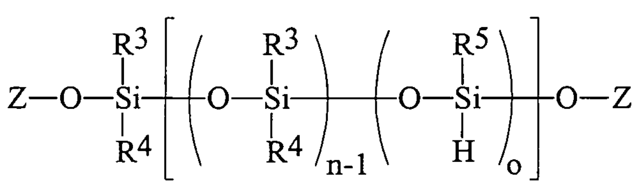

(IVc)

worin

$R^3$, $R^4$ und $R^5$ gleiche oder verschiedene Reste, ausgewählt aus linearen oder verzweigten, gesättigten, ein- oder mehrfach ungesättigten Alkyl-, Aryl-, Alkylaryl- oder Arylalkylresten mit 1 bis 20, insbesondere 1 bis 10 C-Atomen, Halogenalkylgruppen mit 1 bis 20 C-Atomen, Siloxygruppen und Triorganosiloxygruppen darstellen;

n eine ganze Zahl zwischen 5 und 300, vorzugsweise zwischen 5 und 50;

o eine ganze Zahl zwischen 2 und 300, vorzugsweise zwischen 2 und 50 ist; wobei die Summe (n + o) ≤ 400, bevorzugt ≤ 100 ist;

Y ein Halogen, eine Hydroxygruppe, eine Alkoxygruppe, eine organische Säuregruppe oder eine Sulfonsäuregruppe ist;

Z einen Triorganosilylrest darstellt,

wobei die Anteile in der Mischung an (IVb) und (IVc), die unreaktive Endgruppen enthalten, durch den Herstellprozess über Equilibrierung bedingt sind und variiert werden können,
in einer üblichen Kondensationsreaktion zu dem Blockcopolymeren der allgemeinen Formel (V)

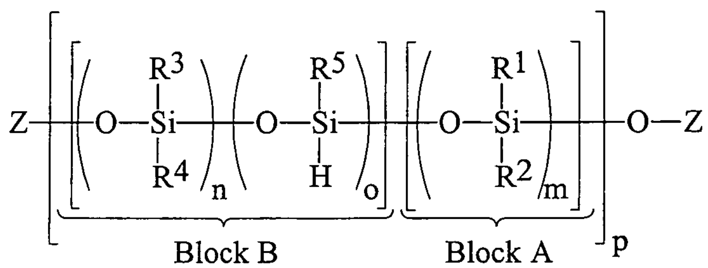


(V)

worin
$R^1$, $R^2$, $R^3$, $R^4$, $R^5$, Z, m, n und o die obige Bedeutung haben und p zwischen 2 und 50, bevorzugt zwischen 2 und 20 liegt, umsetzt.

Die Kondensationsreaktion wird derart durchgeführt, dass die Reaktivität der Endgruppen X und Y aufeinander abgestimmt und für eine Kondensation geeignet ist.

Üblicherweise werden Siloxancopolymere gemäß dem Stand der Technik durch die Formel (VI) dargestellt:

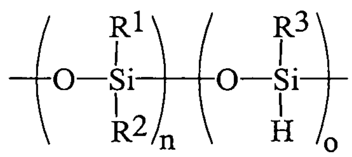

(VI)

wobei $R^1$, $R^2$ und $R^3$ die oben geschilderte Bedeutung haben und n und o ganzzahlige Variable darstellen. Diese Formeln sagen jedoch nichts über die Verteilung der einzelnen Komponenten entlang der Kette aus, die Indizes n und o geben lediglich an, in welchem Verhältnis die einzelnen Komponenten des Polymers zueinander stehen. Die Verteilung der einzelnen Komponenten entlang der Kette ist als Folge des Produktionsprozesses (Equilibrierung) üblicherweise statistisch.
Im Unterschied dazu sind die erfindungsgemäß mitverwendeten Siloxane blockartig aufgebaut, wie gemäß der allgemeinen Formel (V) dargelegt.

In den Blöcken B sind demnach sowohl Siloxaneinheiten enthalten, die keinen Wasserstoff tragen (Index n), als auch Siloxaneinheiten, die über einen Wasserstoffsubstituenten verfügen (Index o). Zusammen bilden diese den Block B, in welchem die einzelnen Bausteine statistisch verteilt sind. Der Block A besteht ausschließlich aus Siloxaneinheiten, die keine Wasserstoffsubstituenten enthalten (Index m). Das gesamte Polysiloxan setzt sich aus einer Wiederholung der Blöcke A und B zusammen (Index p).

Die Siloxane, hergestellt gemäß oben dargelegtem Verfahren, setzen sich zusammen aus Blöcken B gemäß Formel (V), die ihrerseits zusammengesetzt sind gemäß Formel (II), in denen n und o die oben geschilderte Bedeutung haben und Blöcken A gemäß Formel (V), die ihrerseits zusammengesetzt sind gemäß Formel (I), in denen m die oben geschilderte Bedeutung hat. Der Index p kann dabei zwischen 2 und 50, bevorzugt zwischen 2 und 20 liegen.

Die Substituenten des blockweise aufgebauten Siloxans $R^1$, $R^2$, $R^3$, $R^4$ und $R^5$ in Formel (V) können gleich oder verschieden sein und haben die oben geschilderte Bedeutung. Bevorzugt sind Methyl- und Phenylgruppen.

Das Prepolymer (III) kann durch Standardverfahren wie die Hydrolyse von Dichlordiorgano- oder Dialkoxydiorganosilanen oder durch die Equilibrierung von entsprechenden cyclischen Oligomeren hergestellt werden, wodurch ein Polysiloxan erhalten wird, das ausschließlich aus Diorganosiloxaneinheiten besteht.

Die Prepolymermischung (IVa bis IVc) wird hingegen durch die Equilibrierung eines $\alpha,\omega$-funktionellen Siloxans, das in der Kette ausschließlich aus Diorganosiloxaneinheiten besteht, mit einem Siloxan, das in der Kette ausschließlich aus Monoorganohydrogensiloxan-Einheiten besteht, synthetisiert. Die Endgruppen des Siloxans, das ausschließlich aus Monoorganohydrogensiloxan-Einheiten besteht, sind dergestalt, dass sie in einer Kondensationsreaktion nicht reagieren können (z.B. Trimethylsilyl). Da sie während der Equilibrierung des $\alpha,\omega$-funktionellen Siloxans in das Siloxan eingebaut werden, verfügt ein bestimmter Anteil dieser Polymermischung (IVb, IVc) über unreaktive Endgruppen.

In der Kondensationsreaktion des Prepolymers (III) mit der Prepolymermischung (IVa bis IVc) wird die Kettenlänge (Index p) des blockweise aufgebauten Siloxans (V) durch die unreaktiven Endgruppen der Prepolymermischung (IVa bis IVc) begrenzt. Darüber hinaus kann die Anzahl der unreaktiven Endgruppen durch Zugabe eines geeigneten Siloxans wie beispielsweise Hexamethyldisiloxan bei der Equilibrierung der Prepolymermischung (IVa bis IVc) erhöht werden.

Durch die Erhöhung der Anzahl an unreaktiven Endgruppen kann die Gesamtkettenlänge des erfindungsgemäßen blockweise aufgebauten Siloxans gezielt gesteuert werden. Gegenüber den in der EP-A-0 786 488 beschriebenen Verfahren zur Einstellung der Gesamtkettenlänge (Zugabe von Endgruppen bei der Kondensation, z. B. Trimethylchlorsilan oder Trimethylsilanol) bietet diese Vorgehensweise den Vorteil, dass das Endprodukt frei ist von reinem Siliconöl, welches in zahlreichen Anwendungen erhebliche Schwierigkeiten bereitet und daher oftmals unerwünscht ist.

Ein Gegenstand der Erfindung ist die Verwendung von Verbindungen der allgemeinen Formel (VII)

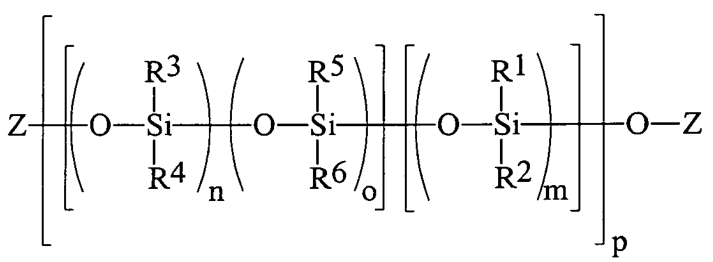

(VII)

worin

$R^1$, $R^2$, $R^3$, $R^4$, $R^5$ gleiche oder verschiedene Reste, ausgewählt aus linearen oder verzweigten, gesättigten, ein- oder mehrfach ungesättigten Alkyl-, Aryl-, Alkylaryl- oder Arylalkylresten mit 1 bis 20, insbesondere 1 bis 10 C-Atomen, Halogenalkylgruppen mit 1 bis 20 C-Atomen, Siloxygruppen und Triorganosiloxygruppen darstellen;

$R^6$ mindestens einen Rest ausgesucht aus der Gruppe $CH_2$-$CH_2$-$(CH_2)_a$-A oder CH=CH-$(CH_2)_a$-A darstellt, wobei

- a eine ganze Zahl zwischen 0 und 10 ist; und
- A einen Rest darstellt, der ausgewählt ist aus Polyoxyalkylenresten oder linearen, verzweigten oder cyclischen, gesättigten, ein- oder mehrfach ungesättigten Alkyl-, Aryl-, Alkylaryl- oder Arylalkylresten mit 1 bis 100, insbesondere 1 bis 50 C-Atomen, die gegebenenfalls Heteroatome enthalten;

Z einen Triorganosilylrest darstellt;
m eine ganze Zahl zwischen 5 und 300;
n eine ganze Zahl zwischen 5 und 300;
o eine ganze Zahl zwischen 2 und 300 ist;
wobei die Summe $(n + o) \leq 400$ ist;
p eine ganze Zahl zwischen 2 und 50 ist,

als Stabilisatoren in der Herstellung von Polyurethanschaumstoffen.

Diese werden erhalten durch Umsetzung der blockweise aufgebauten Siloxane mit ungesättigten Verbindungen (Hydrosilylierung).

Als Reaktionspartner für die Hydrosilylierung dienen hierbei bevorzugt ungesättigte Polyether, so dass $R^6$ aus Formel (VII) bevorzugt der allgemeinen Formel (VIII) entspricht,

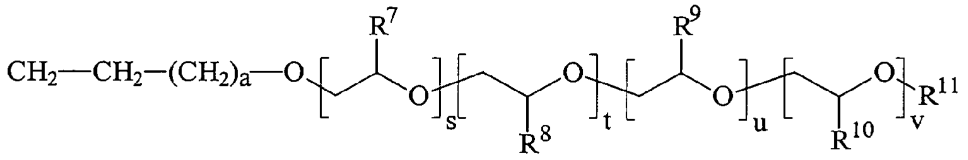 (VIII)

worin

| | |
|---|---|
| a | eine ganze Zahl zwischen 0 und 10; |
| $R^7$, $R^8$, $R^9$, $R^{10}$ | gleiche oder verschiedene Reste, ausgewählt aus Wasserstoff oder linearen oder verzweigten, gesättigten, ein- oder mehrfach ungesättigten Alkyl-, Aryl-, Alkylaryl- oder Arylalkylresten mit 1 bis 20, insbesondere 1 bis 10 C-Atomen und Halogen-alkylgruppen mit 1 bis 20 C-Atomen darstellen, wobei Wasserstoff, Methyl-, Butyl- und Phenylreste bevorzugt sind; |
| s, t, u, v | unabhängig voneinander ganze Zahlen von 0 bis 100, bevorzugt von 0 bis 50 sind, wobei die Summe $(s + t + u + v) \geq 2$ ist; |
| $R^{11}$ | Wasserstoff oder einen Alkylrest, ausgewählt aus linearen oder verzweigten Alkyl-, Aryl-, Alkylaryl - oder Arylalkylresten mit 1 bis 20, insbesondere 1 bis 10 C-Atomen, Halogenalkylgruppen mit 1 bis 20 C-Atomen oder einen Acylrest darstellt, wobei Wasserstoff, Methyl- und Acetylreste bevorzugt sind. |

Die Verwendung dieser Polysiloxan-polyoxyalkylen-Blockcopolymere erlaubt die Darstellung von Polyurethanhartschäumen mit optimiertem Eigenschaftsprofil. Wie es dem Fachmann geläufig ist, erweisen sich im Gegensatz zu Weichschaumanwendungen bei der Herstellung von Hartschäumen im Regelfall Siloxankettenlängen < 50 $SiR_2O$-Einheiten als vorteilhaft. Überraschenderweise zeigen Hartschaumstoffe keine signifikanten Eigenschaftseinbußen, die mit in der vorliegenden Erfindung beschriebenen Blockcopolymeren mit Siloxankettenlängen deutlich > 50 $SiR_2O$-Einheiten hergestellt wurden. Die als Additive verwendeten Blockcopolymere zeichnen sich vielmehr durch ein hohes Stabilisierungspotential aus und können die Zellfeinheit der Schaumstoffe erhöhen und Isolationseigenschaften verbessern.

Ausführungsbeispiele:

Beschreibung der verwendeten Chemikalien:

| | |
|---|---|
| PTF1: | Monomethylhydrogenpolysiloxan, MW ~ 2.500 g/mol, |
| α,ω-C1-Siloxan: | α,ω-Dichlordimethylpolysiloxan, MW ~ 600 g/mol, |
| D4/D5: | Mischung aus Octamethylcyclotetrasiloxan/Decamethylcyclopentasiloxan |
| HMDS: | Hexamethyldisiloxan |
| PDM-Siloxan (I): | α, ω-Dihydroxydimethylpolysiloxan, MW ~ 3.000 g/mol. |
| PDM-Siloxan (II): | α,ω-Dihydroxydimethylpolysiloxan, MW ~ 540 g/mol. |

Beispiele 1 bis 5:

Vorgehensweise der Herstellung von blockweise aufgebauten SiH-Siloxanen, Variante A:

In einem Dreihalskolben mit KPG-Rührer und Rückflußkühler wurden α,ω-Cl-Siloxan, PTF1, evtl. D4/D5 und HMDS unter Rühren bei Raumtemperatur mit 0,1 Gew.-% Trifluormethansulfonsäure versetzt. Die Mischung wurde für 8 h gerührt. Anschließend wurde die Trifluormethansulfonsäure mit 1,5 eq. Ethyldiisopropylamin neutralisiert und die Mischung für 2 h gerührt.
Nach Zugabe des PDM-Siloxans wurde im Vakuum für 5 h gerührt, so dass die entstehende HCl aus dem Reaktionsgemisch entfernt wurde. Anschließend erfolgte die Zugabe der zur Neutralisation des Restgehalts an HCl notwendigen Menge an Ethyldiisopropylamin. Nach 2 h Rühren wurde die Mischung mit 10 Massen-% Isopropanol versetzt. Nachdem das Isopropanol im Vakuum entfernt und das ausgefallene Salz abfiltriert worden war, fiel das blockweise aufgebaute Siloxan als farbloses Öl an.

In Anlehnung an diese Verfahrensweise wurden die in Tabelle 1 aufgeführten Beispiele durchgeführt. Die Viskosität wurde mit Hilfe eines Rotationsviskosimeters (Brookfield LVT) bestimmt, das durchschnittliche Molgewicht mittels Gelpermeationschromatographie ermittelt.

Tabelle 1:

| Beispiel | Einwaage PTF1 [g] | Einwaage C1-Siloxan [g] | Einwaage D4/D5 [g] | Einwaage HMDS [g] | Einwaage PDM-Siloxan (I) [g] | Einwaage PDM-Siloxan (II) [g] | Viskosität [mPas] | Mw [g/mol] |
|---|---|---|---|---|---|---|---|---|
| 1 | 47,7 | 131,7 | - | - | 747,7 | - | 4.600 | 62.600 |
| 2 | 47,7 | 92,2 | - | 11,4 | 428,1 | - | 240 | 19.100 |
| 3 | 323,0 | 492,1 | 681,5 | - | - | 472,1 | 300 | 24.000 |
| 4 | 438,9 | 685,3 | 421,3 | - | 3.822,0 | - | 5.600 | 76.200 |
| 5 | 414,6 | 483,8 | 1.020,3 | - | 879,2 | - | 520 | 29.700 |

Das erfindungsgemäße blockweise aufgebaute Siloxan aus Beispiel 3 (Tabelle 1) wurde anschließend in einer Hydrosilylierung ohne Lösungsmittel mit einem ungesättigten Polyether unter Pt-Katalyse umgesetzt.

Beispiel 6:

Vorgehensweise der Hydrosilylierung eines blockweise aufgebauten SiH-Siloxans:

In einem Dreihalskolben mit KPG-Rührer wurden 80 g des blockweise aufgebauten Siloxans aus Beispiel 3 (Tabelle 1) mit 244,7 g eines mit Allylalkohol gestarteten Polyethers mit einem Molekulargewicht von 800 g/mol und einer Zusammensetzung von 26 Massen-% Propylenoxid und 74 Massen-% Ethylenoxid und 5 mg cis-Platin gemischt. Die Reaktionsmischung wurde unter Rühren für 2 h auf 120 °C erwärmt. Nach dem Abkühlen erhielt man als Produkt eine hochviskose, klare Flüssigkeit.

Anwendungstechnische Überprüfung:

Für den folgenden Vergleich wurden Hartschaumstoffe in einer 145 cm x 14 cm x 3,5 cm großen, auf 45 °C temperierten, verschließbaren metallischen Form durch eine Handverschäumung einer Polyurethanformulierung mit folgenden Bestandteilen produziert:

| | |
|---|---|
| 100,00 pphp | Sorbitol/Glycerol basierendes Polyetherpolyol (460 mg KOH/g) |
| 2,60 pphp | Wasser |
| 1,50 pphp | Dimethylcyclohexylamin |
| 1,70 pphp | Polysiloxan-Polyoxyalkylen-Copolymere |
| 15,00 pphp | Cyclopentan |
| 198,50 pphp | Diphenylmethandiisocyanat, Isomere u. Homologe (Isocyanatgehalt: 31,5 %) |

Die erhaltenen Hartschaumstoffe wurden im Rahmen einer visuellen Beurteilung bezüglich der Oberflächenbeschaffenheit, Innenstörungen und Zellfeinheit untersucht. Weiterhin wurde die mittlere Wärmeleitfähigkeit (K-Faktor) durch Wärmeleitfähigkeitsmessungen an 4 Proben jedes Schaumkörpers mit Hilfe einer Wärmeflussmessung in einem Temperaturgradienten (36 °C/10 °C) bestimmt.

Im Folgenden werden die Ergebnisse, die mit dem erfindungsgemäßen Polysiloxan-Polyoxyalkylen-Blockcopolymeren (Beispiel 6) erzielt worden sind, mit denen eines in Hartschaumanwendungen kommerziell eingesetzten Silicon-Polyether-Copolymeren mit statistischer Verteilung der Polyethermodifikationen entlang der Siloxankette verglichen (TEGOSTAB® B 8404) .

| Additiv | Siloxan-Kettenlänge | Oberfächenstörungen | Innenstörungen | Zellfeinheit | Wärmeleitfähigkeit [mW/mK] |
|---|---|---|---|---|---|
| TEGOSTAB® B 8404 | < 40 | stark | stark | fein | 23,8 |
| Beispiel 6 | > 100 | mittel | stark | sehr fein | 23,5 |

Mit dem Polysiloxan-Polyoxyalkylen-Blockcopolymeren aus Beispiel 6 konnten Hartschaumstoffe erhalten werden, die sich im Vergleich zu kommerziellen Produkten durch ein geringeres Störungsbild, eine feine Zellstruktur und verbesserte Wärmeleitfähigkeiten auszeichnen.

## Patentansprüche

1. Verwendung von Verbindungen der allgemeinen Formel (VII)

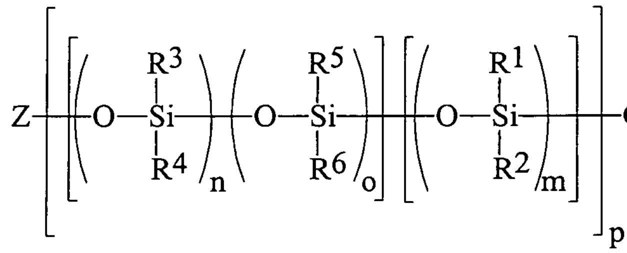 (VII)

worin

$R^1$, $R^2$, $R^3$, $R^4$, $R^5$ gleiche oder verschiedene Reste, ausgewählt aus linearen oder verzweigten, gesättigten, ein- oder mehrfach ungesättigten Alkyl-, Aryl-, Alkylaryl- oder Arylalkylresten mit 1 bis 20, insbesondere 1 bis 10 C-Atomen, Halogenalkylgruppen mit 1 bis 20 C-Atomen, Siloxygruppen und Triorganosiloxygruppen darstellen;

$R^6$ mindestens einen Rest ausgesucht aus der Gruppe $CH_2$-$CH_2$-$(CH_2)_a$-A oder CH=CH-$(CH_2)_a$-A darstellt,
wobei

a eine ganze Zahl zwischen 0 und 10 ist; und

A einen Rest darstellt, der ausgewählt ist aus Polyoxyalkylenresten oder linearen, verzweigten oder cyclischen, gesättigten, ein- oder mehrfach ungesättigten Alkyl-, Aryl-, Alkyl-aryl- oder Arylalkylresten mit 1 bis 100, insbesondere 1 bis 50 C-Atomen, die gegebenenfalls Heteroatome enthalten;

Z einen Triorganosilylrest darstellt;

m eine ganze Zahl zwischen 5 und 300;

n eine ganze Zahl zwischen 5 und 300;

o eine ganze Zahl zwischen 2 und 300 ist;
wobei die Summe $(n + o) \leq 400$ ist;

p eine ganze Zahl zwischen 2 und 50 ist,

als Stabilisatoren in der Herstellung von Polyurethanschaumstoffen.

2. Verwendung von Verbindungen der allgemeinen Formel (VII) gemäß Anspruch 1, **dadurch gekennzeichnet, dass** $R^6$ der allgemeinen Formel (VIII) entspricht:

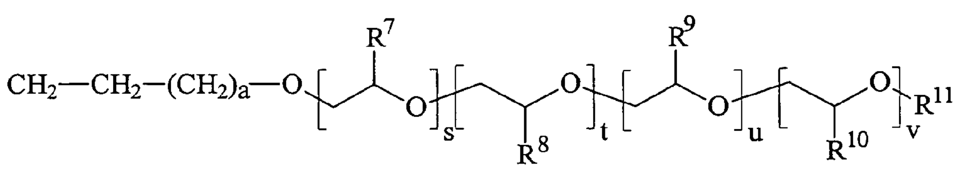 (VIII)

worin

a eine ganze Zahl zwischen 0 und 10;

$R^7$, $R^8$, $R^9$, $R^{10}$ gleiche oder verschiedene Reste, ausgewählt aus Wasserstoff oder linearen oder verzweigten, gesättigten, ein- oder mehrfach ungesättigten Alkyl-, Aryl-, Alkylaryl- oder Arylalkylresten mit 1 bis 20, insbesondere 1 bis 10 C-Atomen und Halogenalkylgruppen mit 1 bis 20 C-Atomen darstellen;

s, t, u, v unabhängig voneinander ganze Zahlen von 0 bis 100, bevorzugt von 0 bis 50 sind, wobei die Summe $(s + t + u + v) \geq 2$ ist;

$R^{11}$ Wasserstoff oder einen Alkylrest, ausgewählt aus linearen oder verzweigten Alkyl-, Aryl-, Alkylaryl- oder Arylalkylresten mit 1 bis 20, insbesondere 1 bis 10 C-Atomen, Halogenalkylgruppen mit 1 bis 20 C-Atomen oder einen Acylrest darstellt.

**3.** Verwendung von Verbindungen der allgemeinen Formel (VII) gemäß den Ansprüchen 1 und 2, **dadurch gekennzeichnet, dass** a zwischen 0 und 4 liegt, dass es sich bei $R^7$, $R^8$, $R^9$ und/oder $R^{10}$ um Wasserstoff oder Methyl-, Butyl- und/oder Phenylreste und bei $R^{11}$ um einen Methyl- oder Acetylrest handelt.

**4.** Stabilisierte Polyurethanschaumstoffe, enthaltend mindestens eine der Verbindungen der Ansprüche 1 bis 3.

Europäisches Patentamt

# EUROPÄISCHER RECHERCHENBERICHT

Nummer der Anmeldung
EP 04 03 0758

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,A | EP 0 867 464 B (TH. GOLDSCHMIDT AG; GOLDSCHMIDT AG) 30. September 1998 (1998-09-30) * Ansprüche 1,2 * | 1 | C08J9/00 C08G77/46 C08G77/44 C08G77/12 |
| A | EP 0 867 462 B (TH. GOLDSCHMIDT AG; GOLDSCHMIDT AG) 30. September 1998 (1998-09-30) * Anspruch 1- * | 1 | |
| P,A | EP 1 439 200 A (GOLDSCHMIDT GMBH) 21. Juli 2004 (2004-07-21) * Ansprüche 1,11-14 * | 1 | |
| A | US 2002/099137 A1 (AUSTIN PAUL E ET AL) 25. Juli 2002 (2002-07-25) * Ansprüche 1,20 * * Spalte 4, Absatz 44-46 * | 1 | |

RECHERCHIERTE SACHGEBIETE (Int.Cl.7)
C08J
C08G

Der vorliegende Recherchenbericht wurde für alle Patentansprüche erstellt

| Recherchenort | Abschlußdatum der Recherche | Prüfer |
|---|---|---|
| Den Haag | 6. April 2005 | Depijper, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

1

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 04 03 0758

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-04-2005

| Im Recherchenbericht angeführtes Patentdokument | Datum der Veröffentlichung | Mitglied(er) der Patentfamilie | Datum der Veröffentlichung |
|---|---|---|---|
| EP 0867464 B | 30-09-1998 | DE 59810692 D1 | 11-03-2004 |
| | | EP 0867464 A1 | 30-09-1998 |
| | | US 5990187 A | 23-11-1999 |
| EP 0867462 B | 30-09-1998 | BR 9801142 A | 14-12-1999 |
| | | DE 59800486 D1 | 05-04-2001 |
| | | EP 0867462 A1 | 30-09-1998 |
| | | JP 10279692 A | 20-10-1998 |
| | | US 6730749 B1 | 04-05-2004 |
| EP 1439200 A | 21-07-2004 | DE 10301355 A1 | 29-07-2004 |
| | | CA 2450173 A1 | 16-07-2004 |
| | | EP 1439200 A1 | 21-07-2004 |
| | | US 2004147703 A1 | 29-07-2004 |
| US 2002099137 A1 | 25-07-2002 | BR 0115758 A | 13-01-2004 |
| | | CA 2429601 A1 | 06-06-2002 |
| | | CN 1520436 A | 11-08-2004 |
| | | EP 1352010 A2 | 15-10-2003 |
| | | MX PA03004814 A | 25-09-2003 |
| | | WO 0244248 A2 | 06-06-2002 |
| | | US 2003176597 A1 | 18-09-2003 |

EPO FORM P0461

Für nähere Einzelheiten zu diesem Anhang : siehe Amtsblatt des Europäischen Patentamts, Nr.12/82